# FASCICULE DE BREVET EUROPEEN

(11) **EP 0 612 172 B1**
(45) Date de publication et mention de la délivrance du brevet: **17.11.1999**
(21) Numéro de dépôt: 94400329.2
(22) Date de dépôt: 15.02.1994
(51) Int. Cl.: H04L 12/56, H04Q 11/00, H04Q 11/04

(54) **Centre satellite photonique-électronique pour raccorder des lignes d'abonnés optiques à un réseau ATM**
Optisch-elektronische Satellitenzentrale zur Verbindung von optischen Teilnehmerleitungen an ein ATM-Netz
Opto-electronic satellite centre for connecting optical subscriber-lines to an ATM network

(30) Priorité: 18.02.1993 FR 9301844
(43) Date de publication de la demande: 24.08.1994
(73) Titulaire: ALCATEL, 75008 Paris (FR)
(72) Inventeur: Jacob, Jean-Baptiste, F-22700 Perros-Guirec (FR); Gabriagues, Jean-Michel, F-78830 Bullion (FR)
(74) Mandataire: Sciaux, Edmond

(56) Documents cités:
- EP-A- 0 497 669
- EP-A- 0 497 670
- PROCEEDINGS OF THE NATIONAL COMMUNICATIONS FORUM, vol.40, 1986, OAK BROOK, ILLINOIS pages 805 - 810 KOHLI AND GOODMAN 'Evolving Wideband LATA Network Technologies and Architectures.'
- IEEE TRANSACTIONS ON PARALLEL AND DISTRIBUTED SYSTEMS, vol.1, no.2, Mai 1990, NEW YORK pages 54 - 67, XP128312 PRUCNAL AND PERRIER 'Optically-Processed Routing for Fast Packet Switching'

## Description

L'invention concerne un centre satellite à technologie mixte photonique-électronique pour raccorder des lignes d'abonné optiques à un réseau de télécommunication à mode de transfert asynchrone. Ces lignes d'abonné optiques transportent des données sous la forme de cellules, de longueur fixe, comportant une en-tête contenant des informations d'acheminement.

La demande de brevet français n°2 646 036 décrit un centre satellite numérique réalisé uniquement en technologie électronique et comportant : une station de commande, un réseau de connection, à mode de transfert asynchrone, et une pluralité de concentrateurs pour raccorder des terminaux d'abonné, notamment des terminaux utilisant le multiplexage temporel asynchrone. Dans ces concentrateurs de type connu, chaque concentrateur comporte une pluralité de circuits d'abonné et deux étages de concentration. Chaque circuit d'accès d'abonné réalise notamment l'émission et la réception de cellules de signalisation et de maintenance.

Le premier étage de concentration comporte une matrice de commutation temporelle asynchrone, commandée par un microprocesseur. Le second étage de concentration comporte une autre matrice de commutation temporelle asynchrone, ou un multiplexeur-démultiplexeur temporel, commandé par un microprocesseur. La structure de ce concentrateur est optimisée pour utiliser des composants électroniques.

La demande de brevet européen 0.497.670 décrit un centre satellite qui utilise principalement la technologie photonique. Il multiplexe et achemine les cellules au moyen de composants photoniques tout au long de leur trajet entre une entrée et une sortie du centre satellite, mais ces composants sont commandés par des dispositifs de commande réalisés au moyen de composants électroniques. La technologie photonique permet de réaliser des opérations de multiplexage, changement de débit, acheminement, avec peu de composants pour une capacité donnée, car les composants photoniques permettent de traiter des cellules ayant un débit binaire de 2,6 gigabits/seconde, avec en plus un multiplexage spectral sur seize longueurs d'onde par exemple.

Ce centre satellite comporte :
- un réseau de connexion photonique relié à un central de rattachement;
- une unité de commande, réalisée en technologie électronique, reliée au réseau de connexion;
- une pluralité de concentrateurs, réalisés principalement en technologie photonique, reliés au réseau de connexion;
- des circuits d'accès d'abonné, réalisés principalement en technologie photonique, reliés respectivement aux lignes d'abonné et aux concentrateurs.

Chaque circuit d'accès d'abonné réalise, pour les cellules provenant d'une ligne d'abonné optique, les fonctions suivantes :
- délimitation des cellules;
- désembrouillage du champ de données de chaque cellule;
- extraction des cellules vides.

Pour les cellules à destination d'une ligne d'abonné, il réalise les fonctions suivantes :
- insertion de cellules vides;
- embrouillage du champ de données;
- calcul d'un mot de détection d'erreur.

Les moyens pour traduire une étiquette de circuit virtuel, ou de faisceau virtuel et pour adjoindre une étiquette d'acheminement à chaque cellule provenant d'une ligne d'abonné, ne sont pas situés dans les circuits d'accès d'abonné, ni dans les concentrateurs, mais sont situés à l'entrée du réseau de connexion et sont donc communs pour traiter les cellules provenant de toutes les lignes d'abonné reliées à un ou plusieurs concentrateurs. Les moyens pour réaliser la fonction police contrôlant le débit sont situés eux aussi à l'entrée du réseau de connexion et sont comuns eux aussi, pour traiter les cellules en provenance de toutes les lignes d'abonné reliées à un ou plusieurs concentrateurs. Ces moyens peuvent donc être communs à un grand nombre de lignes d'abonné, 256 par exemple.

Le nombre de composants photoniques d'un centre satellite ainsi construit est donc fortement réduit par rapport à celui qu'il aurait s'il avait la même structure qu'un centre satellite construit entièrement en technologie électronique, mais en remplaçant les composants électroniques par des composants photoniques. Cette structure est donc très avantageuse pour réaliser un centre satellite entièrement en technologie photonique, c'est-à-dire avec des dispositifs de commande réalisés en technologie photonique. En effet, des dispositifs de commande réalisés en technologie photonique pourraient traiter, sans difficulté dûe au débit, les données contenues dans les cellules ayant un débit de 2,6 Gb/s.

Actuellement le coût des portes logiques optiques ne permet pas de réaliser un processeur optique et des mémoires optiques de grande capacité à un coût acceptable. Il est donc nécessaire d'utiliser un processeur et des mémoires électroniques pour remplir les fonctions mentionnées ci-dessus. Comme cette structure de centre satellite implique de réaliser des opérations logiques sur des cellules à un débit de 2,6 gigabits/seconde, il est alors nécessaire de mettre en parallèle les bits à traiter, pour changer leur débit, et de mettre en parallèle de nombreux composants électroniques. La multiplication des composants électroniques conduit alors à un sur-coût important.

Le but de l'invention est de proposer un centre satellite ayant un coût de réalisation plus réduit que celui décrit à la demande de brevet européen n°0.497.670, en combinant mieux l'utilisation de la technologie photonique et de la technologie électronique.

Selon l'invention, un centre satellite à technologie mixte photonique-électronique pour raccorder des lignes d'abonné à un réseau de télécommunication à mode de transfert asynchrone, ces lignes d'abonné transportant des données sous la forme de cellule, comportant une en-tête contenant des informations d'acheminement ; ce centre comportant :
- un réseau de connexion à mode de transfert asynchrone;
- des circuits d'accès d'abonné, reliés respectivement aux lignes d'abonné;
- au moins un concentrateur reliant le réseau de connexion aux circuits d'accès d'abonné ;
**est caractérisé en ce que** les circuits d'accès d'abonné comportent :
- des moyens pour convertir des signaux optiques, fournis par des lignes d'abonné, en signaux électriques ;
- des moyens électroniques pour discriminer dans le flux de cellules provenant des lignes d'abonné : les cellules vides, les cellules de signalisation, et les cellules de maintenance ;
- des moyens électroniques pour traduire les informations d'acheminement contenues dans les en-têtes des cellules provenant des lignes d'abonné, et inscrire les traductions de ces informations dans ces en-têtes ;
- des moyens électroniques pour adjoindre aux cellules provenant des lignes d'abonné, une étiquette d'acheminement ;
- des moyens électroniques pour surveiller le débit des cellules provenant des lignes d'abonné;
et en ce qu'un concentrateur comporte :
- des moyens électroniques pour multiplexer temporellement et statistiquement les cellules provenant des circuits d'accès d'abonné ;
- des moyens pour convertir des signaux électriques, fournis par lesdits moyens électroniques , en signaux optiques ;
- des moyens photoniques pour multiplexer spectralement les cellules restituées par les moyens pour convertir des signaux électriques en signaux optiques ;
- des moyens photoniques pour multiplier le débit des cellules restituées par les moyens pour multiplexer spectralement ;
- et des moyens photoniques pour multiplexer temporellement, sans multiplexage spectral, les cellules restituées par les moyens pour multiplier le débit.

Le centre satellite ainsi caractérisé a un coût de réalisation réduit par rapport au centre satellite décrit dans la demande de brevet européen n°0.497.670, car les moyens électroniques indispensables pour identifier le type de chaque cellule, traduire les données d'acheminement, et déterminer une étiquette d'acheminement sont placés dans les circuits d'accès d'abonné. Ainsi ils profitent du fait que, dans ces circuits d'accès d'abonné, le débit est nettement moins élevé que dans les étages de concentration : 150 ou 622 Mb/s au lieu de 2,5 Gb/s. La technologie électronique peut alors faire ces opérations logiques sans qu'il soit nécessaire d'agencer de nombreux composants électroniques en parallèle.

Selon une autre caractéristique les moyens électroniques pour multiplexer temporellement et statistiquement comportent des moyens pour augmenter le débit de chaque cellule de manière à laisser un temps de garde entre deux cellules consécutives.

Le centre satellite ainsi caractérisé permet d'utiliser, parmi les moyens photoniques constituant les concentrateurs, des convertisseurs de longueur d'onde accordables et des filtres accordables nécessitant un certain temps d'établissement avant de pouvoir traiter chaque cellule. Ces convertisseurs et ces filtres accordables permettent des modes de réalisation particulièrement avantageux.

Le centre satellite selon l'invention combine donc l'utilisation de composants électroniques qui sont bien adaptés pour les fonctions logiques, avec un coût actuellement inférieur à celui des composants photoniques pour une même fonction; et l'utilisation de composants photoniques, qui présentent de nombreux avantages pour les fonctions de multiplexage et de commutation : plus grande bande passante, plus grande rapidité, et possibilité d'un multiplexage spectral permettant de réduire le nombre de composants.

L'invention sera mieux comprise et d'autres détails apparaîtront à l'aide de la description ci-dessous et des figures l'accompagnant :
- la figure 1 représente le schéma synoptique d'un exemple de réalisation d'un centre satellite selon l'invention;
- la figure 2 représente le schéma synoptique d'un circuit d'accès d'abonné que comporte cet exemple de réalisation;
- la figure 3 représente le schéma synoptique d'un concentrateur que comporte cet exemple de réalisation;
- la figure 4 représente le schéma synoptique d'une partie de ce concentrateur;
- la figure 5 représente le schéma synoptique de la matrice de commutation photonique que comporte cet exemple de réalisation;
- la figure 6 représente le schéma synoptique d'une interface de rattachement que comporte cet exemple de réalisation pour être raccordé à un centre de rattachement.

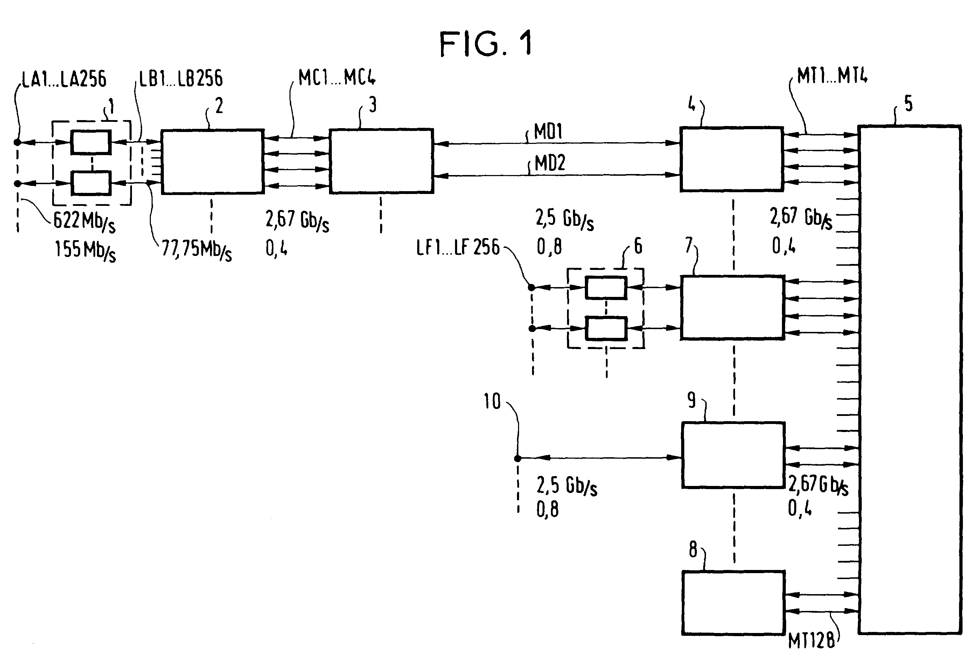

L'exemple de réalisation représenté sur la figure 1 comprend :
- des bornes LA1, ..., LA256, LF1..., LF256 reliées respectivement à des lignes d'abonné émettant et recevant des données sous la forme de cellules, de longueur fixe, par un multiplexage temporel asynchrone sur des porteuses optiques;
- des circuits d'accès d'abonné, 1 et 6 par exemple;
- des concentrateurs, tels que les concentrateurs 2 et 7;
- des interfaces de transmission, telles que 3 et 4 par exemple;
- un réseau de connexion à mode de transfert asynchrone, 5, comportant 128 accès bidirectionnels;
- une unité de commande, 8, commandant le réseau 5;
- des interfaces de rattachement, 9 par exemple;
- et des bornes d'entrée-sortie, telle que 10, reliées à un centre de rattachement appartenant au réseau général de télécommunication, par des multiplex à multiplexage temporel asynchrone.

Chaque terminal d'abonné est relié à un circuit d'accès d'abonné, 1 ou 6, par une fibre optique monomode bidirectionnelle ayant un débit de 622 Mb/s ou 155 Mb/s. Chaque circuit d'accès est relié à une borne d'entrée d'un concentrateur par un multiplex électrique constitué de huit liaisons en parallèle dans chaque sens, avec un débit de 77,75 Mb/s sur chaque liaison. Par exemple, le concentrateur 2 est relié à 256 circuits d'accès d'abonné, 1, par 256 multiplex LB1, ..., LB256, qui sont constitués de huit liaisons électriques dans chaque sens.

Deux catégories de concentrateurs sont à distinguer, selon leur distance par rapport au réseau de connexion 5. Des concentrateurs éloignés, tel que le concentrateur 2, sont reliés au réseau de connexion 5 par l'intermédiaire : d'un multiplexeur-démultiplexeur 3, de deux lignes à fibre optique, MD1 et MD2, et d'un multiplexeur-démultiplexeur 4. Le multiplexeur-démultiplexeur 3 est situé à proximité du concentrateur 2 et lui est relié par quatre multiplex bidirectionnels MC1, ..., MC4. Le multiplexeur-démultiplexeur 4 est situé à proximité du réseau de connexion 5 et lui est relié par quatre multiplex bidirectionnels MT1, ..., MT4.

Les multiplex MC1, ..., MC4, MT1, ..., MT4, transportant chacun des cellules sous la forme d'un signal optique ayant un débit de 2,67 Gb/s et une charge de 0,4 erlang. Ils sont portés chacun par une fibre optique dans chaque sens. Les lignes MD1, ..., MD2 ont un débit de 2,5 Gb/s et une charge de 0,8 erlang, correspondant aux caractéristiques normalisées des réseaux de transport à fibre optique avec multiplexage temporel asynchrone.

Les multiplex du réseau de connexion 5 ont un débit de 2,67 Gb/s avec une charge maximale de 0,4 erlang. Cette valeur de débit a été retenue car elle permet de tirer parti de la grande rapidité de la technologie photonique. La charge réduite à 0,4 erlang permet de réduire la taille des mémoires tampons utilisées dans le réseau de connexion 5, la réduction de la taille de ces mémoires étant très importantes lorsque la charge passe de 0,8 à 0,4.

Mais les systèmes de transmission reliant les concentrateurs éloignés au réseau de connexion 5 doivent avoir une charge maximale compatible avec le rendement optimal d'une liaison, c'est pourquoi une charge de 0,8 erlang a été choisie pour les lignes MD1,...,MD2.

Pour tirer parti de la rapidité de la technologie photonique, dans les derniers étages des concentrateurs 2 et 7, les cellules sont multiplexées au débit de 2,67 Gb/s sur une fibre optique. Cette valeur de débit est la même pour tous les concentrateurs afin de donner la même structure à tous, quelle que soit leur distance par rapport au centre de rattachement. Pour assurer la transmission entre un concentrateur éloigné tel que le concentrateur 2, et le réseau de connexion 5, il est donc prévu une première interface de transmission, 3, qui réalise un multiplexage dans le rapport 2 à 1 pour les cellules en provenance d'un terminal d'abonné; et il est prévu une seconde interface de transmission, 4, qui réalise ensuite un démultiplexage dans un rapport 1 à 2 sur ces mêmes cellules. Naturellement, les interfaces 3 et 4 réalisent les fonctions inverses pour des cellules provenant du réseau de connexion 5 et à destination d'un terminal d'abonné.

L'interface 3 réalise en outre un changement de débit, de 2,67 Gb/s à 2,5 Gb/s, et l'interface 4 réalise le changement de débit inverse pour adapter le débit des entrées-sorties des multiplexeurs-démultiplexeurs 3 et 4 au débit normalisé des lignes MD1 et MD2. Les interfaces 3, 4 sont réalisés conformément à la description donnée dans la demande de brevet français n° 2 672 175. Les concentrateurs proches du réseau de connexion 5, tel que le concentrateur 7, sont reliés directement à ce réseau, chacun par quatre multiplex bidirectionnels ayant chacun un débit de 2,67 Gb/s et une charge de 0,4 erlang, et qui sont portés chacun par une fibre optique dans chaque sens. Dans cet exemple, le réseau de connexion 5 possède 128 accès bidirectionnels pour 128 multiplex MT1 à MT128, au débit de 2,67 Gb/s et de charge égale à 0,4 erlang.

Il permet de raccorder notamment 16 concentrateurs, soit 4086 terminaux d'abonné. Ces 16 concentrateurs utilisent 64 accès du réseau de connexion 5. Deux autres accès sont reliés à l'unité de commande 8 par deux multiplexeurs, et 62 autres accès sont reliés à 31 multiplexeurs-démultiplexeurs, qui assurent une liaison avec le centre de rattachement. Parmi eux, seul le multiplexeur-démultiplexeur 9 est représenté à titre d'exemple.

Le réseau de connexion 5 est une matrice photonique mais elle est commandée par des circuits électroniques, l'unité de commande 8, la technologie des mémoires photoniques étant, pour moment, insuffisamment développée pour remplacer tous les circuits électroniques de commande, par des circuits photoniques à un coût raisonnable.

Le centre satellite est relié à un centre de commutation, dit de rattachement, appartenant au réseau général de télécommunication. Ce centre de rattachement est à mode de transfert asynchrone mais il peut être réalisé au moyen d'une technologie quelconque. Il peut être proche ou éloigné du centre satellite. Dans ce dernier cas, il est nécessaire de mettre les cellules sous une forme adaptée pour une bonne efficacité de transmission. Il est donc prévu des interfaces de rattachement telles que l'interface 9, qui ont pour première fonction de réaliser le même multiplexage-démultiplexage et le même changement de débit que les interfaces de transmission 3, 4; et qui ont pour seconde fonction de préparer les cellules arrivant au centre satellite, en vue de leur acheminement à travers le réseau de connexion 5 et les concentrateurs tels que 2 et 7; et de préparer les cellules provenant du centre satellite, avant de les restituer au réseau général de télécommunication.

L'interface 9 réalise un multiplexage temporel des cellules provenant du réseau de connexion 5 en transformant le débit de 2,67 Gb/s à 2,5 Gb/s car elle supprime le temps de garde et l'étiquette d'acheminement qui étaient nécessaires jusqu'à la sortie du centre satellite mais pas au-delà. Elle modifie la charge des multiplex sortant du réseau de connexion 5 en l'augmentant de 0,4 erlang à 0,8 erlang pour qu'elle permette un rendement optimal des lignes de transmission vers le réseau de télécommunication général.

Pour les cellules venant du réseau général de télécommunication, l'interface 9 réalise la transformation inverse. Elle augmente le débit de 2,5 à 2,67 Gb/s car elle adjoint à chaque cellule une étiquette d'acheminement; et huit périodes de bit libres, comme temps de garde pour permettre l'accord de convertisseurs de longueur d'onde et de filtres que comportent les concentrateurs et le réseau de connexion 5. En outre, elle traduit les informations d'acheminement contenues dans l'en-tête de chaque cellule et inscrit la traduction de ces informations à la place des anciennes données; elle adjoint à chaque cellule une étiquette d'acheminement, dans l'intervalle libéré entre les cellules par l'augmentation du débit.

Les circuits d'accès d'abonné 1,6 traduisent les informations d'acheminement contenues dans l'en-tête de chaque cellule provenant d'une ligne d'abonné, et inscrivent la traduction à la place des anciennes informations. Ces données d'acheminement désignent le circuit virtuel affecté à cette communication sur un multiplex, pour acheminer la communication soit vers le centre de rattachement du centre satellite, soit sur un multiplex allant vers un autre terminal d'abonné rattaché au même satellite, à travers le même concentrateur ou un autre concentrateur.

Les circuits d'accès d'abonné 1,6 adjoignent à chaque cellule une étiquette d'acheminement pour router cette cellule à travers le réseau de connexion 5, et à travers un concentrateur 2, 7, etc, si c'est une communication entre deux terminaux d'abonné relié à ce même centre satellite. Dans ce cas, l'étiquette de routage comporte non seulement des informations pour la traversée des étages de commutation du réseau de connexion 5 mais aussi des informations de routage pour la traversée du concentrateur auquel est rattaché le terminal d'abonné destinataire. En effet, pour acheminer une cellule du réseau de connexion 5 vers un terminal d'abonné, il y a une commutation et pas seulement un démultiplexage périodique dans les concentrateurs 2, 7 pour les cellules en provenance du réseau de connexion 5 et à destination d'un terminal d'abonné. Ceci apparaîtra ultérieurement au cours de la description détaillée du concentrateur 2.

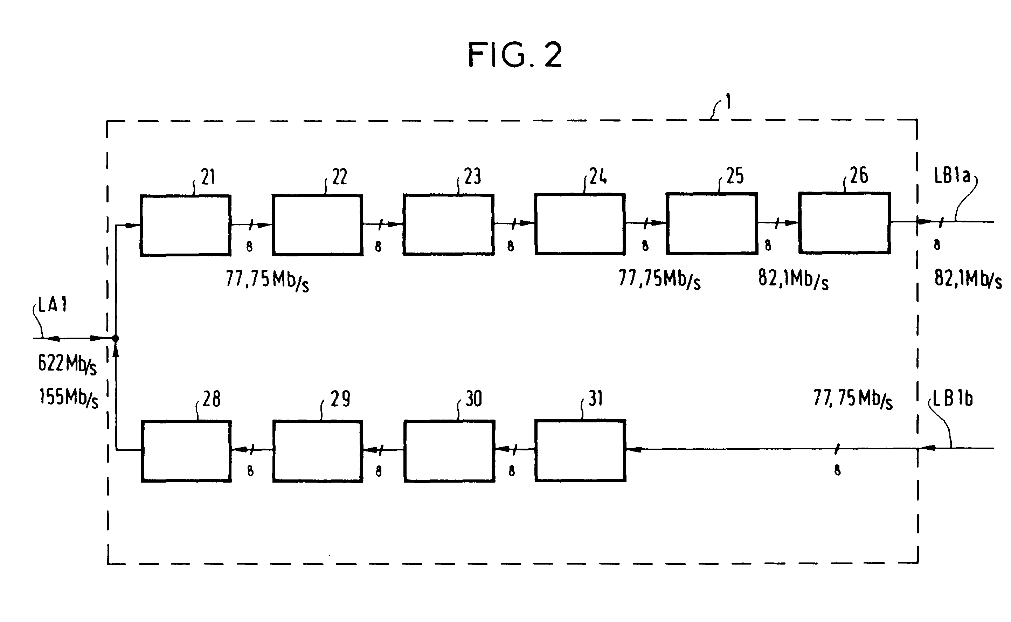

La figure 2 représente le schéma synoptique de l'un des circuits d'accès d'abonné 1. Pour traiter les cellules provenant des terminaux d'abonné, il comprend :
- une entrée-sortie reliée à une ligne optique d'abonné LA1, émettant et recevant des cellules avec un débit de 622 Mb/s ou 155 Mb/s, selon le type de terminal d'abonné;
- une interface de ligne 21, réalisée principalement en technologie électronique, assurant une conversion optique- électrique et une mise en parallèle des bits, octet par octet, sur une sortie comportant 8 liaisons électriques;
- un dispositif 22, réalisé en technologie électronique, assurant : la délimitation des cellules par un procédé classique, la remise en phase par rapport à une horloge locale, et le désembrouillage des données transportées par ces cellules;
- un dispositif 23, réalisé en technologie électronique, assurant la discrimination : des cellules vides, des cellules de signalisation, et des cellules de maintenance;
- un dispositif 24, réalisé en technologie électronique, assurant la traduction des informations d'acheminement contenues dans les en-têtes des cellules fournies par le dispositif 23;
- un dispositif 25, réalisé en technologie électronique, pour adjoindre à chaque cellule non vide une étiquette d'acheminement, comportant 3 octets, qui sera utilisée dans le réseau de connexion 5 et éventuellement dans un concentrateur; l'adjonction de cette étiquette se traduisant par un changement de débit, de 77,75 Mb/s à 82,1 Mb/s;
- un dispositif 26, réalisé en technologie électronique, assurant la fonction police contrôlant le débit des cellules comportant une même en-tête, afin de contrôler qu'il est conforme au débit négocié lors de l'établissement de la communication correspondant à cette en-tête;
- un multiplex LB1a sortant du circuit 1, et constitué de huit liaisons électriques fournissant des cellules octet par octet, avec un débit de 82,1 Mb/s sur chaque liaison.

Pour traiter les cellules provenant du concentrateur 2, il comprend :
- un multiplex LB1b entrant dans le circuit 1, et constitué de huit liaisons électriques recevant des cellules octet par octet, avec un débit de 77,75 Mb/s, sur chaque liaison, ces cellules ayant été débarrassées de leurs étiquettes d'acheminement;
- un dispositif 31, réalisé en technologie électronique, ayant une entrée recevant les huit bits fournis par le multiplex LB1b, et ayant pour fonction d'insérer : des cellules vides, des cellules de signalisation, et des cellules de maintenance dans le flot de cellules destinées à un terminal d'abonné raccordé à la ligne LA1;
- un dispositif 30, réalisé en technologie électronique, pour embrouiller les données des cellules fournies par le dispositif 31;
- un dispositif 29, réalisé en technologie électronique, pour calculer un mot de détection d'erreur à partir de l'en-tête de chaque cellule fournie par le dispositif 30, et pour insérer ce mot dans cette en-tête;
- un dispositif 28 d'interface de ligne, réalisé principalement en technologie électronique, pour remettre en série les bits des cellules fournies octet par octet par le dispositif 29, et convertir le signal binaire électrique ainsi obtenu en un signal optique qui est émis sur la ligne d'abonné LA1, au moyen d'un duplexeur qui est commun avec l'interface 21 et qui n'est pas représenté.

La réalisation des dispositifs 21 à 31 est à la portée de l'Homme de l'Art. En particulier des algorithmes de contrôle de débit sont décrits dans les demandes de brevet français n°89 133 41 et 89 081 93.

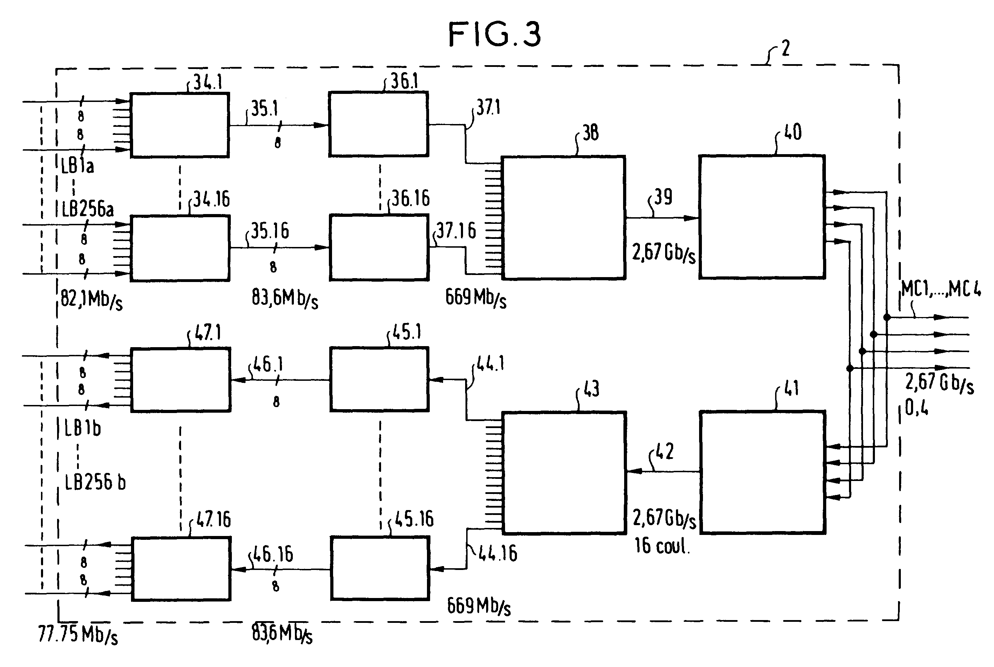

La figure 3 représente le schéma synoptique d'un concentrateur de cet exemple de réalisation, par exemple le concentrateur 2. Pour traiter les cellules provenant des circuits d'accès d'abonné, 1, il comporte :
- 16 dispositifs 34.1, ..., 34.16, réalisés en technologie électronique, pour multiplexer temporellement et statistiquement les cellules fournies sur les multiplex LB1a, ..., LB256a entrant dans le concentrateur 2, pour réaliser une concentration d'ordre 16, et accessoirement pour modifier légèrement le débit de façon à laisser un temps de garde entre deux cellules consécutives; chacun de ces dispositifs recevant 16 multiplex avec un débit de 82,1Mb/s et restituant les cellules sur un seul multiplex 35.1, ..., ou 35.16, constitué de huit liaisons électriques en parallèle ayant chacune un débit de 83,6 Mb/s;
- 16 dispositifs 36.1, ..., 36.16, pour remettre en série les bits des octets fournis respectivement par les dispositifs 34.1, ..., 34.16, et les convertir sous la forme d'un signal optique de longueur d'onde quelconque; ce signal optique étant fourni respectivement à des fibres optiques 37.1, ..., 37.16, avec un débit de 669 Mb/s;
- un dispositif 38, réalisé en technologie photonique, pour multiplexer spectralement et changer le débit des cellules fournies par les dispositifs 36.1, ..., 36.16; et les restituer sur une seule fibre optique 39 en modulant 16 longueurs d'onde différentes et avec un débit de 2,67 Gb/s sur chaque longueur d'onde;
- un dispositif 40, réalisé en technologie photonique, pour multiplexer temporellement et périodiquement les cellules fournies par la fibre optique 39, et les restituer sur 4 fibres optiques constituant respectivement les multiplex bidirectionnels MC1, ..., MC4 avec un débit inchangé égal à 2,67 Gb/s, mais sans multiplexage spectral, afin de n'imposer aucune contrainte particulière à l'étage suivant qui est le réseau de connexion 5.

Pour traiter les cellules provenant de l'interface de transmission, 3, il comprend :
- un dispositif 41, réalisé en technologie photonique, pour démultiplexer temporellement et périodiquement, puis multiplexer spectralement des cellules reçues par les quatre multiplex MC1, ..., MC4, et provenant du réseau de connexion 5; puis les restituer sur une fibre optique unique, 42, avec le même débit de 2,67 Gb/s mais en modulant 16 longueurs d'onde distinctes;
- un dispositif 43, réalisé en technologie photonique, pour : changer le débit des cellules fournies par la fibre optique 42, les démultiplexer spectralement, puis restituer des cellules sur 16 fibres optiques distinctes 44.1, ..., 44.16 avec un débit de 669 Mb/s sur chacune;
- 16 dispositifs 45.1, ..., 45.16, réalisés principalement en technologie électronique, pour convertir en signal binaire électrique les signaux binaires optiques fournis respectivement par les fibres 44.1, ..., 44.16, et pour les mettre sous la forme d'un signal électrique constitué de 8 bits parallèles, fournis à une sortie électrique 46.1, ..., ou 46.16, avec un débit de 83,6 Mb/s pour chaque bit;
- 16 dispositifs 47.1, ..., 47.16, réalisés en technologie électronique, pour démultiplexer temporellement et périodiquement les cellules fournies par les sorties 46.1, ..., 46.16, et pour réaliser un ajustement de débit à la valeur de 77, 75 Mb/s en supprimant les bits de l'étiquette d'acheminement et le temps de garde; chaque dispositif 47.1, ..., 47.16 comportant 16 sorties fournissant chacune 8 bits en parallèle sur l'un des multiplex LB1b, ..., LB256b sortant du concentrateur 2 à destination de 256 circuits d'accès d'abonné 1, qui se chargeront de restituer les cellules en remettant les bits en série et sous forme optique.

Le multiplexage spectral réalisé dans le dispositif 38 permet d'utiliser les mêmes moyens de changement de débit pour 16 cellules reçues simultanément, et multiplexées spectralement sur 16 longueurs d'onde différentes. Le dispositif 38 permet ainsi d'utiliser pleinement les possibilités de débit élevé de la technologie photonique. Ce multiplexage spectral ne pouvant être conservé dans le réseau de connexion 5, le dispositif 40 remplace le multiplexage spectral sur 16 longueurs d'onde par un multiplexage temporel périodique sur les 4 multiplex MC1, ..., MC4 sur lesquels les cellules peuvent être portées par des longueurs d'onde quelconques, celles-ci n'étant plus significatives d'un multiplexage spectral.

Le dispositif 41 réalise un démultiplexage temporel périodique, grâce au fait que le réseau de connexion 5 fournit des cellules dans un ordre tel qu'elles puissent être démultiplexées temporellement par un simple démultiplexage temporel périodique. Ces cellules sont ensuite multiplexées spectralement sur 16 longueurs d'onde différentes, de façon à ce que les 16 cellules puissent être traitées simultanément par le dispositif de changement de débit 43. Ainsi un seul dispositif de changement de débit 43 permet de traiter toutes les cellules à destination de 256 lignes d'abonné.

Les dispositifs 45.1, ..., 45.16 permettent de ramener les cellules sous la forme de 8 signaux électriques en parallèle permettant un traitement par des composants électroniques. Ainsi il est possible d'utiliser des dispositifs de démultiplexage temporel périodique 47.1, ..., 47.16 réalisés entièrement en technologie électronique. Les dispositifs 47.1, ..., 47.16 qui seront décrits plus loin comportent un nombre d'emplacements mémoires relativement élevé, c'est pourquoi il est avantageux de les réaliser en technologie électronique.

Il apparaît donc que, grâce à la technologie photonique, les dispositifs 38 et 43 permettent de réaliser des changements de débit en étant communs à 256 lignes d'abonné. Par ailleurs, grâce à la technologie électronique les dispositifs 34.1, ..., 34.16, 47.1, ..., 47.16, permettent un multiplexage et un démultiplexage temporel correspondant à une concentration et à une déconcentration de rapport 1/16, à un coût plus raisonnable que si la technologie photonique était employée pour réaliser les mémoires et les moyens de commande nécessaires à ces opérations de multiplexage et démultiplexage.

Les dispositifs 36.1 à 36.16 et 45.1 à 45.16 sont de réalisation classique et à la portée de l'Homme de l'Art.

Le dispositif 38 pour multiplexer spectralement et pour changer le débit, le dispositif 40 pour multiplexer temporellement et périodiquement, le dispositif 43 pour changer le débit et démultiplexer spectralement, et le dispositif 41 pour démultiplexer temporellement et périodiquement, puis pour multiplexer spectralement, peuvent être réalisés conformément à l'enseignement de la demande de brevet français n° 2 672 175.

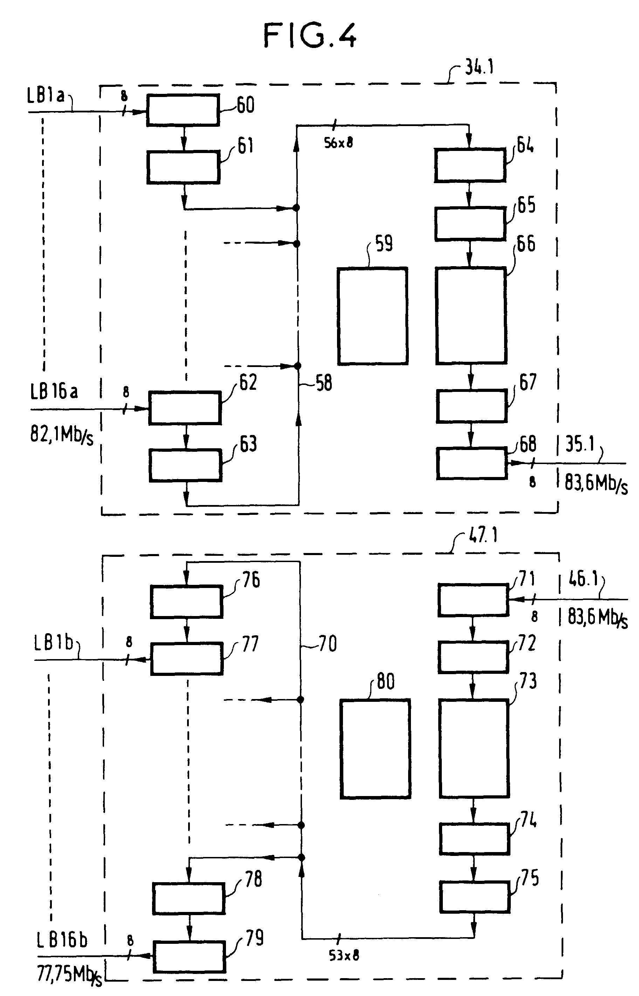

La figure 4 représente le schéma synoptique plus détaillé des dispositifs 34.1 et 47.1, donné à titre d'exemple. Le dispositif 34.1 réalise un multiplexage temporel statistique et un ajustement de débit, de 82,1 Mb/s à 83,6 Mb/s correspondant à la création d'un temps de garde égal à huit périodes de bit entre cellules consécutives.

Chaque multiplex LB1a, ..., LB256a est relié à une entrée d'un registre à décalage comportant une entrée de 8 bits en parallèle, et comportant une sortie constituée de 56 octets en parallèle. Ce registre à décalage permet de rassembler dans un seul registre tous les bits constituant une même cellule. Par exemple, le multiplex LB1a est relié au registre à décalage 60 et le multiplex LB256a est reliée au registre à décalage 62. La sortie de chacun de ces registres à décalage est constituée de 56 x 8 bits en parallèle, et est reliée à une entrée de 56 x 8 bits d'un registre permettant d'accéder à un bus 58 comportant 56 x 8 conducteurs en parallèle. Par exemple, les registres à décalage 60 et 62 accèdent au bus 58 par l'intermédiaire des registres 61 et 63 respectivement.

Le bus 58 est relié à une mémoire 66 du type premier-entré-premier-sorti, par l'intermédiaire d'un registre 64 permettant de lire sur le bus 58, et d'un registre 65 permettant d'écrire dans la mémoire 66; une entrée du registre 65 étant reliée à une sortie du registre 64 et une entrée de la mémoire 66 étant reliée à une sortie du registre 65. Les registres 64 et 65 ont une capacité de 56 octets, ce qui correspond à une cellule munie de son étiquette d'acheminement. La mémoire 66 comporte par exemple 32 registres ayant chacun une capacité de 56 octets, de façon à ne pas être saturée si les 16 entrées reliées aux multiplex LB1a, ..., LB16a reçoivent chacune une cellule au même instant.

Une sortie de la mémoire 66 est reliée chacune à la sortie du dispositif 34.1, c'est-à-dire au multiplex 35.1, par l'intermédiaire d'un registre 67 de lecture dans la mémoire 66 et d'un registre à décalage 68. Les registres 67 et 68 ont une capacité de 56 octets. Le registre 67 mémorise d'un bloc les 56 octets qui sont lus dans la mémoire 66. Le registre 68 mémorise d'un bloc les 56 octets qui sont contenus dans le registre 67, puis les restitue octet par octet au multiplex 35.1.

Le dispositif 34.1 comporte en outre un dispositif de commande 59 qui est relié par des liaisons non représentées à des entrées d'horloge des registres 60 à 65 et 67, 68; et qui est relié à des entrées de commande d'écriture et des entrées de commande de lecture de la mémoire 66. Le dispositif de commande 59 commande ces registres et cette mémoire 66 pour inscrire dans la mémoire 66 des cellules au fur et à mesure qu'elles sont reçues, à un rythme de 1,46 Mb/s quand une cellule se présente, en leur donnant éventuellement un ordre de priorité fonction du rang de l'entrée LB1a, ..., LB16a qui a reçu chaque cellule; et pour lire les cellules stockées dans la mémoire 66, de manière continue et à un rythme constant de 1,49 Mb/s. Les cellules sont émises successivement, octet par octet, sur la liaison 35.1 avec un débit binaire de 83,6 Mb/s sur chacun des 8 bits de ce multiplex, et avec un temps de garde égal à la durée et émission d'un octet, entre deux cellules consécutives.

Le dispositif 47.1 réalise à la fois un démultiplexage temporel périodique et un ajustement de débit. Il reçoit des cellules par le multiplex 46.1 sous la forme de blocs de 8 bits en parallèle, chaque bit ayant un débit de 83,6 Mb/s. Il restitue les cellules sur les 16 multiplex LB1b, ..., LB16b comportant chacun huit liaisons électriques en parallèle, chaque liaison ayant un débit binaire de 77, 75 Mb/s. La différence de débit correspond à la suppression des 3 octets d'étiquette d'acheminement et à la suppression du temps de garde qui correspond à un octet dans cet exemple de réalisation.

Le multiplex 46.1 est relié à une entrée d'un registre à décalage 71 qui a une entrée pour 8 bits en parallèle. Le registre 71 possède une sortie fournissant 53 x 8 bits en parallèle à une entrée d'un registre 72. Ce registre 72 a une capacité de 53 octets qui correspond à une cellule sans étiquette d'acheminement, et il permet l'écriture d'une cellule dans une mémoire 73 du type premier-entré-premier-sorti. La mémoire 73 a une capacité de 32 cellules. Elle a une sortie de 53 x 8 bits, reliée à un registre 74 permettant d'effectuer une lecture dans cette mémoire 73. Le registre 74 a une capacité d'une cellule, et a une sortie reliée à l'entrée d'un registre 75 ayant lui aussi une capacité d'une cellule. Le registre 75 possède une sortie 53 x 8 bits, reliée à un bus 70. Le registre 75 permet d'émettre sur le bus 70 chaque cellule lue dans la mémoire 73.

Chacun des multiplex LB1b, ..., LB16b est relié à une sortie d'un registre à décalage, constituée de 8 bits en parallèle. La capacité de ce registre correspond à une cellule et permet de convertir chaque cellule en 53 octets successifs. Par exemple, les multiplex LB1b et LB16b sont reliés respectivement aux sorties de registres 77 et 79. Le registre 77 possède une entrée reliée à une sortie d'un registre 76 fournissant 53 x 8 bits en parallèle. Une entrée du registre 79 est reliée à une sortie d'un registre 78 fournissant 53 x 8 bits en parallèle. Le registre 76 permet de lire sur le bus 70 chaque cellule qui est destinée au multiplex LB1b. Le registre 78 permet de lire sur le bus 70 chaque cellule qui est destinée au multiplex LB16b.

Le dispositif 47.1 comporte en outre un dispositif de commande 80 relié à des entrées d'horloge des registre 71, 72 et 74 à 79 par des liaisons non représentées; et relié à des entrées de commande d'écriture et des entrées de commande de lecture de la mémoire 73 par des liaisons non représentées. Le dispositif de commande 80 commande le registre à décalage 71 pour écrire dans celui-ci 53 octets sur les 56 octets correspondant à chaque cellule arrivant sur la liaison 46.1. Les trois octets correspondant à une étiquette d'acheminement ne sont pas inscrits dans le registre 71 et sont ainsi éliminés. De même, aucune écriture n'est réalisée pendant une durée correspondant à un octet et constituant le temps de garde entre cellules consécutives. Il commande l'inscription des cellules dans la mémoire 73 au rythme de 1,58 Mb/s et il commande leur lecture au rythme de 1,47 Mb/s. La capacité de la mémoire 73 est prise égale à 16 cellules, par exemple.

Cette capacité est choisie par l'Homme de l'Art en fonction du traffic.

Selon une variante de réalisation, le temps de garde peut être réalisé dans le dispositif 25 d'étiquettage, situé dans les circuits d'abonné, en même temps que l'ajustement nécessaire pour l'étiquettage.

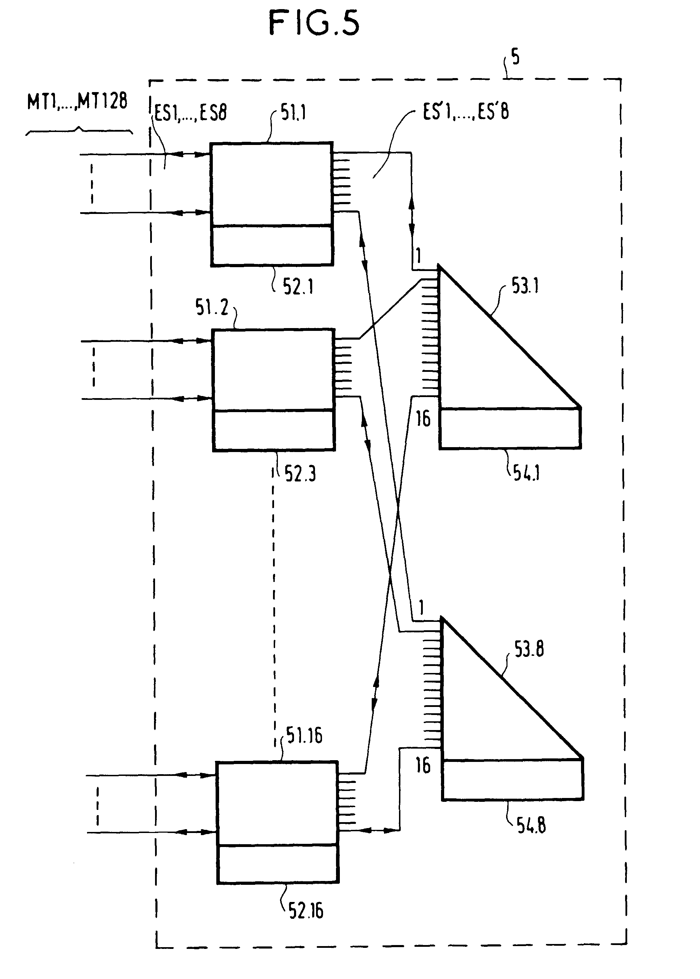

La figure 5 représente le schéma synoptique d'un exemple de réalisation du réseau de connexion 5. Il comprend 24 matrices de commutation 16X16, identiques, parmi lesquelles seize matrices, 51.1, ..., 51.16, sont utilisées en configuration à 8X8 accès bidirectionnels pour constituer simultanément un premier et un troisième étage de commutation, et 8 matrices 53.1, ..., 53.8 sont utilisées repliées pour offrir 16 entrées-sorties, et constituer un deuxième étage de commutation.

Les multiplex MT1, ..., MT128 sont groupés par groupe de 8 multiplex reliés respectivement à 8 entrées-sorties ES1, ..., ES8 de l'une des 16 matrices 51.1, ..., 51.16. Les entrées-sorties ES1, ..., ES8 correspondent aux lignes de ces matrices 51.1, ..., 51.16. Chacune de ces matrices 51.1, ..., 51.16 est associée respectivement à un dispositif électronique de commande 52.1, ..., 52.16 qui comporte un microprocesseur. En outre, les matrices 51.1 à 51.16 possèdent chacune huit entrée-sorties ES'1, ..., ES'8 correspondant aux colonnes de ces matrices et qui sont reliées à huit entrées-sorties des matrices 53.1 à 53.8 de la manière suivante : la i-ème entrée-sortie de la matrice 53.j est reliée à la j-ème entrée-sortie correspondant à une colonne de la matrice 51.i; i variant de 1 à 8; et j variant de 1 à 16. Chacune des matrices 53.1 à 53.8 est associée respectivement à un dispositif de commande 54.1 à 54.8, analogue aux dispositifs de commande 52.1 à 52.16.

Chaque cellule comprend une en-tête de 5 octets suivie de 48 octets d'information, quand elle entre dans le réseau de connexion 5. Cette en-tête comprend notamment : un identificateur identifiant le circuit virtuel d'un abonné, un identificateur identifiant éventuellement un faisceau virtuel regroupant une pluralité de circuits virtuels, et un mot de détection d'erreur, portant sur l'en-tête. Le routage dans chaque étage de commutation, notamment dans les matrices du réseau de connexion 5, est réalisé au moyen de l'étiquette d'acheminement qui est adjointe en plus à chaque cellule. Dans le centre satellite selon l'invention, cette étiquette est insérée au niveau des circuits d'accès d'abonné 1 et 6, ou du multiplexeur-démultiplexeur 9.

Dans cet exemple de réalisation, les matrices de commutation du réseau 5 sont des matrices à 16 sorties. Déterminer le routage à chaque étage de commutation nécessite 4 bits. Le nombre maximal d'étages de commutation à traverser est égal à 5, par conséquent l'étiquette de routage doit comporter au moins 20 bits. Il est donc prévu d'adjoindre une étiquette comportant 3 octets, soit 24 bits, devant l'en-tête de chaque cellule. Ceci conduit à des cellules comportant un plus grand nombre de bits et donc conduit à choisir un débit de 2,60 Gb/s dans le réseau 5. L'adjonction d'un temps de garde entre cellules consécutives conduit finalement à un débit de 2,67 Mb/s. Une suppression des étiquettes de routage et un retour au débit initial de 2,5 Gb/s, est réalisé dans les concentrateurs 2 et 7 mais aussi dans les multiplexeurs-démultiplexeurs, tels que 9, qui constituent une interface de transmission vers un centre de rattachement, du réseau général de télécommunication.

Le réseau de connexion 5 a non seulement pour fonction d'aiguiller chaque cellule vers un multiplex relié au concentrateur destinataire de cette cellule, mais il réalise en outre une remise en ordre des cellules sortant sur chaque multiplex afin que le dispositif 41 d'un concentrateur 2 ou 7 puisse les démultiplexer temporellement par un simple démultiplexage temporel périodique. Deux bits de l'étiquette d'acheminement sont consacrés à repérer l'ordre des cellules dans un groupe de quatre cellules sur un multiplex.

Les bits de l'étiquette d'acheminement sont lus dans les dispositifs de commande 52.1 à 52.16 et 54.1 à 54.8 associés aux matrices 51.1 à 51.16 et 53.1 à 53.8. Ces dispositifs de commande aiguillent et retardent les cellules dans des files d'attente des matrices, en fonction des bits de l'étiquette d'acheminement. Les deux bits consacrés à repérer l'ordre sont attribués aux cellules de façon à repérer l'ordre où les cellules doivent sortir du réseau de connexion 5.

La matrice de commutation photoniques 51.1, ..., 51.16 et 53.1, ..., 54.8 et leurs dispositifs de commande 52.1, ..., 52.16 et 54.1, ..., 54.8 sont décrits dans la demande de brevet français n°2 672 175.

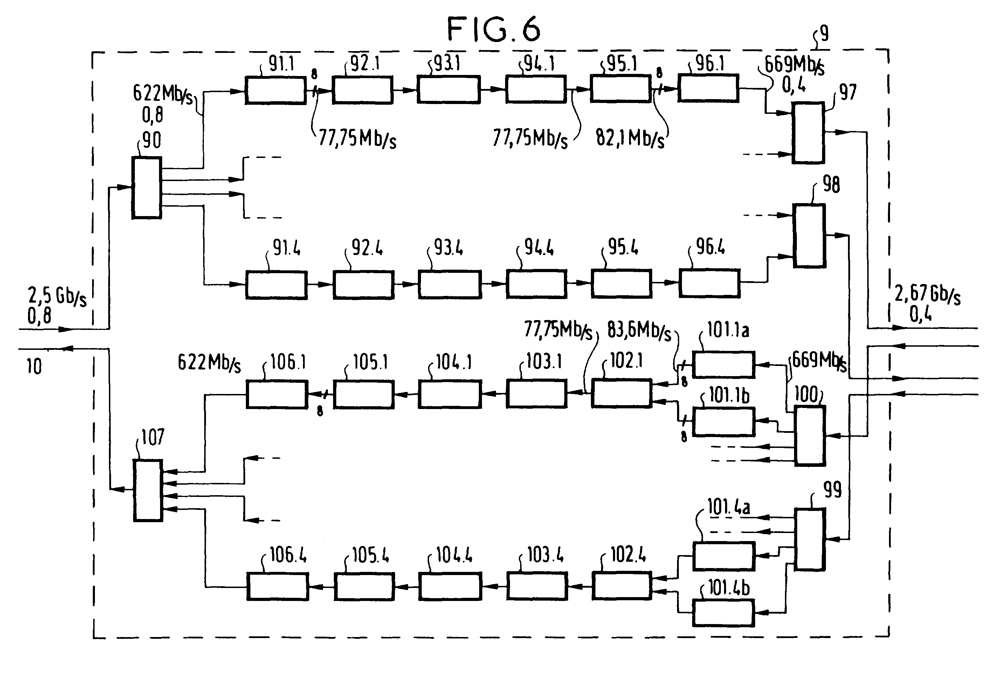

La figure 6 représente le schéma synoptique d'un exemple de réalisation de l'interface de rattachement 9. Elle comporte une première partie pour traiter les cellules provenant du réseau général de télécommunication et à destination du réseau de connexion 5.

Cette partie comporte :
- un démultiplexeur 90, réalisé en technologie photonique, pour démultiplexer temporellement et périodiquement des cellules ayant un débit 2,5 Gb/s, en les distribuant sur quatre fibres optiques avec un débit de 622 Mb/s;
- quatre séries de dispositifs, travaillant en parallèle et reliées respectivement aux quatre fibres optiques sortant du démultiplexeur 90;
- deux multiplexeurs 97 et 98, ayant chacun deux entrées et une sortie, réalisées en technologie photonique, le multiplexeur 97 ayant deux entrées reliées respectivement à une sortie de la première série et à une sortie de la seconde série, le multiplexeur 98 ayant une entrée reliée à une sortie de la troisième série, et une entrée reliée à une sortie de la quatrième série; les sorties démultiplexeurs 97 et 98 étant reliées respectivement à deux liaisons sortantes appartenant aux deux multiplex reliant l'interface 9 au réseau de connexion 5.

Le démultiplexeur 90 réalise un démultiplexage temporel périodique et un changement de débit, pour transmettre vers chacune des séries de circuit une cellule sur quatre en conservant une charge de 0,8 erlang. Il est réalisé en technologie photonique, et conformément à l'enseignement de la demande du brevet français n°2 672 175.

Les multiplexeurs 97 et 98 sont réalisés eux aussi en technologie photonique et réalisent un multiplexage temporel périodique et un changement de débit pour amener les cellules d'un débit de 622 Mb/s et une charge de 0,8 erlang à un débit de 2,67 Gb/s et une charge de 0,4 erlang. Ils peuvent être réalisés conformément à l'enseignement de la demande de brevet français n° 2 672 175.

Les quatre séries de dispositifs sont identiques. Les références des dispositifs les constituant sont distinguées par des indices 1 à 4.

A titre d'exemple, la première série de dispositifs comporte:
- un dispositif 91.1, réalisé essentiellement en technologie électronique, pour convertir un signal optique ayant un débit de 622 Mb/s en un signal électrique constitué de 8 bits en parallèle avec un débit de 77,75 Mb/s pour chacun des bits;
- un dispositif 92.1, réalisé en technologie électronique, pour délimiter les cellules fournies par le dispositif 91.1, les remettre en phase par rapport à une horloge locale, et pour désembrouiller les données qu'elles contiennent;
- un dispositif 93.1, réalisé en technologie électronique, pour discrimer : les cellules de signalisation, les cellules de maintenance et les cellules vides;
- un dispositif 94.1, réalisé en technologie électronique, pour traduire l'identificateur de circuit virtuel et l'identificateur de faisceau virtuel des cellules, et remplacer la valeur de ces identificateurs par leur traduction;
- un dispositif 95.1, réalisé en technologie électronique, pour adjoindre à chaque cellule une étiquette d'acheminement, en modifiant le débit des cellules de façon à permettre l'insertion des étiquettes d'acheminement et la création d'un temps de garde correspondant à 8 périodes de bits entre cellules successives, le débit passant alors de 77,75 Mb/s à 82,1 Mb/s sur chacun des 8 bits en parallèle;
- un dispositif 96.1, réalisé principalement en technologie électronique, pour sérialiser le signal reçu sous la forme de 8 bits en parallèle, et le mettre sous la forme d'un signal optique ayant un débit de 669 Mb/s.

Le dispositif 90 est analogue à la combinaison des dispositifs 41 et 43 du concentrateur 2. Il peut donc être réalisé conformément à l'enseignement de la demande de brevet français n°2 672 175. Les dispositifs 97 et 98 sont chacun analogues à la combinaison des dispositifs 38 et 40 du concentrateur 2. Ils peuvent donc être réalisés conformément à l'enseignement de la demande de brevet français n°2 672 175.

Les dispositifs 92 sont analogues au dispositif 22 du concentrateur 2. Les dispositifs 93 sont analogues au dispositif 23 du concentrateur 2. Les dispositifs 94 sont analogues au dispositif 24 du concentrateur 2. Les dispositifs 95 sont analogues au dispositif 25 du concentrateur 2. La réalisation des dispositifs 92, 93, 94, 95 en technologie électronique est à la portée de l'Homme de l'Art.

Une seconde partie de l'interface 9 traite les cellules provenant du réseau de connexion 5 et allant vers le réseau général de télécommunication. Cette partie comporte :
- deux dispositifs 99 et 100, réalisés en technologie photonique, pour démultiplexer temporellement et périodiquement, et pour changer le débit des cellules fournies par le réseau de connexion 5 avec un débit de 2,67 Gb/s et une charge de 0,4 erlang; chacun de ces dispositifs comportant quatre sorties restituant les cellules avec un débit de 669 Mb/s et une charge de 0,4 erlang;
- quatre séries de dispositifs qui seront décrites plus loin et qui travaillent en parallèle;
- et un dispositif 107, réalisé en technologie photonique, pour multiplexer temporellement et périodiquement, en changeant le débit, des cellules fournies par les quatres séries de circuits, les cellules étant restituées sur une seule fibre optique avec un débit de 2,5 Gb/s et une charge de 0,8 erlang.

Les quatre séries de dispositifs sont identiques. Les références des dispositifs les constituant sont distinguées par des indices de 1 à 4. A titre d'exemple, la première série comporte :
- deux dispositifs 101.a et 101.b ayant chacun une entrée reliée à une sortie de l'un des dispositifs 99 et 100, et ayant chacun une sortie; leur fonction étant de convertir un signal binaire optique en un signal électrique comportant 8 bits en parallèle, avec un débit de 83,6 Mb/s sur chaque bit;
- un dispositif 102.1, réalisé en technologie électronique, pour multiplexer temporellement et statistiquement les cellules reçues de deux dispositifs tels que les dispositifs 101.a et 101.b, en changeant le débit de 83,6 Mb/s à 77,75 Mb/s, ce multiplexage statistique permettant de réaliser une concentration, d'une charge de 0,4 sur deux multiplex à une charge de 0,8 erlang sur un seul multiplex;
- un dispositif 103.1, réalisé en technologie électronique, pour insérer : des cellules de signalisation, des cellules de maintenance, et des cellules vides, dans le flot des cellules fournies par le dispositif 102.1;
- un dispositif 104.1, réalisé en technologie électronique, pour embrouiller les données des cellules;
- un dispositif 105.1 réalisé en technologie électronique, pour calculer un mot de détection d'erreur portant sur l'en-tête de chaque cellule, et insérer ce mot dans la cellule;
- et un dispositif 106.1, réalisé essentiellement en technologie électronique, pour convertir les signaux électriques constitués de 8 bits en parallèle sous la forme d'un signal optique binaire, le débit passant de 77,75 Mb/s à 622 Mb/s.

Le dispositif 107 n'a plus qu'à réaliser un multiplexage temporel périodique, et un changement de débit, pour restituer au réseau général de télécommunication des cellules ayant un débit de 2,5 Gb/s, avec une charge de 0,8 erlang.

Les dispositifs 101a, 101b et 106 sont analogues respectivement aux dispositifs 21 et 28 des circuits d'accès d'abonné, et leur réalisation est à la portée de l'Homme de l'Art. Les dispositifs 102 sont analogues au dispositif 34.1 décrit précédemment en se référant à la figure 4. Les dispositifs 103 sont analogues au dispositif 31 des circuits d'accès d'abonné 1. Les dispositifs 35 sont analogues au dispositif 29 des circuits d'accès d'abonné 1. Les dispositifs 105 sont analogues au dispositif 29 des circuits d'accès d'abonné 1. Les dispositifs 92 sont analogues au dispositif 22 des circuits d'accès d'abonné 1. Les dispositifs 93 sont analogues au dispositif 23 des circuits d'accès d'abonné. Les dispositifs 94 sont analogues au dispositif 24 des circuits d'abonné 1. Les dispositifs 95 sont partiellement analogues au dispositif 25 des circuits d'abonné 1, mais en plus de déterminer et d'insérer une étiquette d'acheminement, et ils rajoutent un temps de garde entre les cellules.

Les fonctions réalisées par tous ces dispositifs sont classiques dans les centres de commutation à mode de transfert asynchrone réalisés en technologie électronique, et leur réalisation en technologie électronique est donc à la portée de l'Homme de l'Art.

La portée de l'invention n'est pas limitée à l'exemple de réalisation décrit ci-dessus. Le centre satellite selon l'invention peut facilement être adapté par l'Homme de l'Art pour être raccordé à des lignes d'abonné ou à un centre de rattachement émettant et recevant des cellules sous la forme électrique.

## Revendications

1. Centre satellite à technologie mixte photonique-électronique pour raccorder des lignes d'abonné à un réseau de télécommunication à mode de transfert asynchrone, ces lignes d'abonné transportant des données sous la forme de cellule, comportant une en-tête contenant des informations d'acheminement ; ce centre comportant :
- un réseau de connexion (5) à mode de transfert asynchrone;
- des circuits (1, 6) d'accès d'abonné, reliés respectivement aux lignes d'abonné;
- au moins un concentrateur (2, 7) reliant le réseau de connexion (5) aux circuits d'accès d'abonné (1, 6);
**caractérisé en ce que** les circuits (1, 6) d'accès d'abonné comportent :
- des moyens (21) pour convertir des signaux optiques, fournis par des lignes d'abonné, en signaux électriques ;
- des moyens électroniques (23) pour discriminer dans le flux de cellules provenant des lignes d'abonné : les cellules vides, les cellules de signalisation, et les cellules de maintenance;
- des moyens électroniques (24) pour traduire les informations d'acheminement contenues dans les en-têtes des cellules provenant des lignes d'abonné, et inscrire les traductions de ces informations dans ces en-têtes;
- des moyens électroniques (25) pour adjoindre aux cellules provenant des lignes d'abonné, une étiquette d'acheminement;
- des moyens électroniques (26) pour surveiller le débit des cellules provenant des lignes d'abonné;
et en ce qu'un concentrateur (2, 7) comporte :
- des moyens électroniques (34) pour multiplexer temporellement et statistiquement les cellules provenant des circuits d'accès d'abonné (1) ;
- des moyens (36.1,...,36.16) pour convertir des signaux électriques, fournis par lesdits moyens électroniques (34), en signaux optiques ;
- des moyens photoniques (38) pour multiplexer spectralement les cellules restituées par les moyens (36.1,...,36.16) pour convertir des signaux électriques en signaux optiques ;
- des moyens photoniques (38) pour multiplier le débit des cellules restituées par les moyens pour multiplexer spectralement ;
- et des moyens photoniques (40) pour multiplexer temporellement, sans multiplexage spectral, les cellules restituées par les moyens (38) pour multiplier le débit.

2. Centre satellite selon la revendication 1, caractérisé en ce que les moyens électroniques (34) pour multiplexer temporellement et statistiquement comportent des moyens (34.1,...,34.16) pour augmenter le débit de chaque cellule de manière à laisser un temps de garde entre deux cellules consécutives.

## Patentansprüche

1. Satellitenzentrale mit gemischt photonischelektronischer Technologie zur Verbindung von Teilnehmerleitungen mit einem Telekommunikationsnetz in asynchronem Transfermodus, wobei die Teilnehmerleitungen Daten in der Form von Zellen transportieren, die einen Nachrichtenkopf umfassen, der Leitweginformationen enthält; wobei diese Zentrale umfasst:
ein Netz zur Verbindung (5) in asynchronem Transfermodus;
Teilnehmerzugangsschaltkreise (1, 6), jeweils verbunden mit Teilnehmerleitungen;
zumindest einen Konzentrator (2, 7), der das Verbindungsnetz (5) mit den Teilnehmerzugangsschaltkreisen (1, 6) verbindet;
**dadurch gekennzeichnet,** dass die Teilnehmerzugangsschalckreise (1, 6) umfassen:
Einrichtungen (21) zur Konvertierung optischer Signale, bereitgestellt von den Teilnehmerleitungen, in elektrische Signale;
elektronische Einrichtungen (23) zur Diskriminierung in dem Strom der aus den Teilnehmerleitungen stammenden Zellen: leere Zellen, Signalisationszellen, sowie Wartungszellen;
elektronische Einrichtungen (24) zur Übersetzung der Leitweginformationen, enthalten in den Nachrichtenköpfen der aus den Teilnehmerleitungen stammenden Zellen, und zum Einschreiben der Übersetzungen dieser Informationen in die Nachrichtenköpfe;
elektronische Einrichtungen (25) zum Anhängen von Leitweginformationen enthaltenden Etiketten an die aus den Teilnehmerleitungen stammenden Zellen;
elektronische Einrichtungen (26) zur Überwachung der Last der aus den Teilnehmerleitungen stammenden Zellen;
und dadurch, dass ein Konzentrator (2, 7) umfasst:
elektronische Einrichtungen (34) zum zeitweiligen und statistischen Multiplexen der aus den Teilnehmerzugangsschaltkreisen (1) stammenden Zellen;
Einrichtungen (36.1, ..., 36.16) zur Konvertierung der elektrischen Signale, die von den elektronischen Einrichtungen (34) bereitgestellt werden, in optische signale;
photonischer Einrichtungen (38) zur spektralen Bündelung der von den Einrichtungen (36.1, ..., 36.16) abgegebenen Zellen zur Konvertierung der elektrischen Signale in optische Signale;
photonischer Einrichtungen (38) zur Multiplikation der Last der von den Einrichtungen zum spektralen Multiplexen abgegebenen Zellen;
und photonische Einrichtungen (40) zum zeitweiligen Multiplexen, ohne spektrales Multiplexen, der von den Einrichtungen (38) abgegebenen Zellen, zur Multiplikation der Last.

2. Satellitenzentrale nach Anspruch 1, dadurch gekennzeichnet, dass die elektronischen Einrichtungen (34) zum zeitweiligen und statistischen Multiplexen Einrichtungen (34.1 ..., 34.16) umfassen, um die Last einer jeden Zelle zu erhöhen, um eine Haltezeit zwischen zwei aufeinanderfolgenden Zellen einzufügen.

## Claims

1. Hybrid photonic-electronic subscriber access unit for connecting subscriber lines to an asynchronous transfer mode telecommunication network, said subscriber lines conveying data in the form of cells including a header containing routing information, said access unit including:
- an asynchronous transfer mode switching network (5);
- subscriber line interface circuits (1, 6) connected to respective subscriber lines;
- at least one concentrator (2, 7) connecting the switching network (5) to the subscriber line interface circuits (1, 6);
characterized in that the subscriber line interface circuits (1, 6) include;
- means (21) for converting optical signals supplied by the subscriber lines into electrical signals;
- electronic means (23) for discriminating between empty cells, signalling cells and maintenance cells in the stream of cells from the subscriber lines;
- electronic means (24) for translating routing information contained in the headers of the cells from the subscriber lines and writing the translated information into said headers;
- electronic means (25) for adding a routing label to the cells from the subscriber lines; and
- electronic means (26) for monitoring the bit rate of the cells from the subscriber lines;
and in that a concentrator (2, 7) comprises:
- electronic means (34) for statistically time-division multiplexing the cells from the subscriber line interface circuits (1);
- means (36.1, ... , 36.16) for converting electrical signals supplied by said electronic means (34) into optical signals;
- photonic means (38) for wavelength-division multiplexing the cells output by the means (36.1, ... , 36.16) for converting electrical signals into optical signals;
- photonic means (38) for multiplying the bit rate of the cells output by the wavelength-division multiplexing means; and
- photonic means (40) for time-division multiplexing without wavelength-division multiplexing the cells output by the bit rate multiplying means (38).

2. Subscriber access unit according to claim 1 characterized in that the electronic statistical time-division multiplexing means (34) include means (34.1, ..., 34.16) for increasing the bit rate of each cell in order to leave a guard time between two consecutive cells.
